# EUROPÄISCHE PATENTSCHRIFT

(11) **EP 1 146 690 B1**
(45) Veröffentlichungstag und Bekanntmachung des Hinweises auf die Patenterteilung: **21.06.2006**
(21) Anmeldenummer: 00108276.7
(22) Anmeldetag: 14.04.2000
(51) Int. Cl.: H04L 12/26, H04L 29/06

(54) **Verfahren und Vorrichtung zur Analyse von Daten**
Method and apparatus for data analysis
Méthode et appareil pour l'analyse de données

(43) Veröffentlichungstag der Anmeldung: 17.10.2001
(73) Patentinhaber: Tektronix Berlin GmbH & Co. KG, 13629 Berlin (DE)
(72) Erfinder: Arweiler, Hans, Dipl.-Ing., D-12161 Berlin (DE)
(74) Vertreter: Schurack, Eduard F.

(56) Entgegenhaltungen:
- ABSILLIS L ET AL: "ADVANCED PROTOCOL ANALYSERS" PROCEEDINGS OF THE IFIP TC6 INTERNATIONAL CONFERENCE ON INFORMATION NETWORKS AND DATA COMMUNICATION,NL,AMSTERDAM, NORTH HOLLAND, Bd. CONF. 5, 18. April 1994 (1994-04-18), Seiten 311-330, XP000593300 ISBN: 0-444-81869-3

## Beschreibung

Die vorliegende Erfindung betrifft ein Verfahren und eine Vorrichtung zur Analyse von Daten, deren Abfolge durch eine Zustandsmaschine beschreibbar ist.

Digitale Daten werden in einem Netzwerk gewöhnlich nach vorgegebenen Regeln übertragen. Eine Ausprägung derartiger Regeln sind sogenannte Protokolle. Protokolle können in Form von SDL-Diagrammen bzw. als Zustandsmaschinen beschrieben werden. Ein Teilnehmer an der Datenübertragung befindet sich demnach immer in einem bestimmten Zustand der Zustandsmaschine, ausgehend von dem er bei Vorliegen einer bestimmten Bedingung bzw. bei Vorliegen bestimmter Bedingungen in einen anderen Zustand wechseln kann.

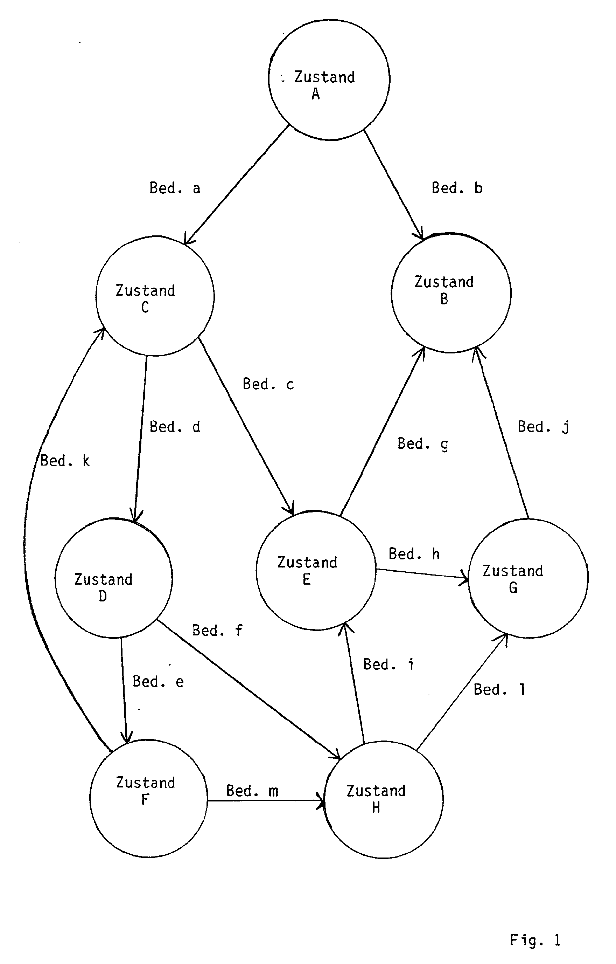

Fig. 1 zeigt zur Erläuterung ein einfaches Beispiel einer Zustandsmaschine. Es wird angenommen, der betrachtete Telekommunikationsteilnehmer befindet sich zunächst im Zustand A. Von diesem Zustand A kann er sich bei Vorliegen der Bedingung a in den Zustand C verändern. Bei Vorliegen der Bedingung b kann er sich in den Zustand B verändern. Ausgehend vom Zustand C kann er sich bei Vorliegen der Bedingung c in den Zustand E, bei Vorliegen der Bedingung d in den Zustand D verändern. Ausgehend vom Zustand E kann er sich bei Vorliegen der Bedingung g in den Zustand B, bei Vorliegen der Bedingung h in den Zustand G verändern, usw..

Für die Analyse von Netzwerken im Hinblick auf Übertragungsfehler, Störungen und dergleichen werden häufig sogenannte Protokolltester eingesetzt. Ein Protokolltester muß daher ausgelegt sein, die übertragenen Daten zu analysieren. Gemäß einem ersten Stand der Technik findet diese Analyse im Off-Line-Betrieb statt, d.h. die übertragenen Daten werden zunächst in einen Speicher geladen und anschließend mittels Software-Suchroutinen ausgefiltert. Je nach den aufgefundenen Daten können schrittweise weitere Datenfragmente aus der Gesamtmenge der Daten gesucht und analysiert werden. Der Nachteil dieser Vorgehensweise liegt darin, daß hierdurch keine Analyse in Echtzeit ermöglicht wird. Aus einer unverhältnismäßig großen gespeicherten Datenmenge müssen die relevanten Daten zeitaufwendig aussortiert werden. Aus der US 5,850,388, deren Offenbarung durch diese Bezugnahme in den Offenbarungsgehalt der vorliegenden Anmeldung aufgenommen wird, ist eine andere Vorgehensweise bekannt. Um Daten in Echtzeit analysieren zu können, ist der dort beschriebene Protokolltester mit mehreren RISC (Reduced Instruction Set Computer) Prozessoren versehen und verfügt weiterhin über Hardware-Filter, um aus den eingehenden Daten Bit-Sequenzen auszufiltern, die von einem Benutzer zuvor spezifiziert wurden.

Der Nachteil eines Protokolltesters gemäß der US 5,850,388 besteht darin, daß damit ein gewaltiger Aufwand an Hardware einhergeht, der sich nicht nur in den Kosten niederschlägt, sondern auch in Gewicht und damit Handlichkeit des Geräts.

Der von Absillis und Goossens M. geschriebene Artikel "Advanced Protocol Analysers" offenbart eine Vorrichtung zur Analyse von Daten gemäss dem Oberbegriff des Anspruch 7.

Die Aufgabe der vorliegenden Erfindung besteht daher darin, ein Verfahren bzw. eine Vorrichtung zur Analyse von Daten der eingangs genannten Art vorzuschlagen, das ebenfalls eine Analyse in Echtzeit ermöglicht, jedoch einen deutlich reduzierten Aufwand an Hardware erfordert.

Diese Aufgabe wird gelöst, durch ein Verfahren, mit den Merkmalen von Patentanspruch 1 sowie durch eine Vorrichtung mit den Merkmalen von Patentanspruch 7. Die abhängigen Ansprüche stellen verschiedene Ausführungsbeispiele vor.

Die im nachfolgenden aufgeführten Vorteile gelten sowohl für das erfindungsgemäße Verfahren als auch für die erfindungsgemäße Vorrichtung, werden der Einfachheit halber jedoch am Bei-spiel des Verfahrens ausgeführt. Die Erfindung basiert auf der Erkenntnis, daß ausgehend von einem aktuellen Zustand innerhalb der Zustandsmaschine nur ein Teil aller Zustände der Zustandsmaschine als Folgezustand in Betracht kommen. Demnach ist es nicht nötig alle Zustände und alle Bedingungen in einer Hardwareschaltung nachzubilden, vielmehr genügt die Nachbildung einer Teilmenge der Zustände und Bedingungen der Zustandsmaschine, die ausgehend vom aktuellen Zustand der Zustandsmaschine im nächsten Schritt oder in den nächsten Schritten von Relevanz sein können. In Kenntnis des aktuellen Zustands wird dann die Nachbildung durch Laden mindestens eines weiteren Zustands und/oder mindestens einer weiteren Bedingung aktualisiert. In entsprechender Weise wird das Filter aktualisiert, insbesondere durch Laden von Bedingungen, die ausgehend vom aktuellen Zustand der Zustandsmaschine möglich sind. Durch das Aktualisieren der Nachbildung im Hinblick auf den aktuellen Zustand ist nur eine begrenzte Chip-Komplexität notwendig, da die Elemente der hardwaremäßigen Nachbildung der Zustandsmaschine nur temporär verfügbar sein müssen. Durch die Ladbarkeit der Hardware können in höchst flexibler Weise auch Kundenwünsche und Länderanpassungen berücksichtigt werden.

Eine derartige Realisierung mit ladbarer Hardware ermöglicht, daß der gesamte Hardwareaufwand sehr niedrig gehalten werden kann. Dadurch lassen sich Protokolltester realisieren, die sich durch ihr geringes Gewicht sowie sehr gute Handhabbarkeit auszeichnen. Insbesondere lassen sich durch die erfindungsgemäße Lösung in der Hand haltbare Protokolltester realisieren.

Im Rahmen der vorliegenden Erfindung kann die Zustandsmaschine einem Datenübertragungsprotokoll entsprechen. Für den Fall, daß das Protokoll gemäß dem OSI-Referenzmodell aufgebaut ist, läßt sich die erfindungsgemäße Analysevorrichtung besonders vorteilhaft einsetzen zur Analyse der zwischen der Datenverbindungsschicht und der Präsentationsschicht liegenden Protokollschicht.

Besonders vorteilhaft ist es, auch das Filter als ladbare Hardwareschaltung zu realisieren, wobei vorgesehen werden kann, auch die Einstellung des Filters durch Laden weiterer oder geänderter Filterparameter in Abhängigkeit des ermittelten neuen aktuellen Zustands zu aktualisieren.

Weitere vorteilhafte Weiterbildungen der Erfindung können den Unteransprüchen entnommen werden. Ein Ausführungsbeispiel der Erfindung wird im Folgenden unter Hinweis auf die beigefügten Zeichnungen näher beschrieben. Es stellen dar:
- Fig. 1: in schematischer Darstellung ein einfaches Beispiel einer Zustandsmaschine; und
- Fig. 2: in Blockschaltbilddarstellung den Aufbau einer erfindungsgemäßen Analysevorrichtung.

Fig. 1 zeigt in schematischer Darstellung den Aufbau eines Protokolls anhand einer Zustandsmaschine. In diesem einfachen Beispiel zeigen die Kreise Zustände an, die zwischen den Kreisen angeordneten Pfeile entsprechen einer oder mehreren Bedingungen, die erfüllt sein müssen, um vom Zustand am Ausgangspunkt des Pfeils zum Zustand an der Pfeilspitze zu wechseln. Bei der aus der US 5,850,388 bekannten Hardwarerealisierung wäre die gesamte Zustandsmaschine hardwaremäßig realisiert.

Die erfindungsgemäße Lösung geht einen anderen Weg: Ausgehend von einem Zustand A zum Zeitpunkt t1 sind in der Hardwarenachbildung der Zustandsmaschine lediglich die Bedingungen a und b sowie die Zustände B und C geladen. Für den Fall, daß zum Zeitpunkt t2 die Bedingung a eintritt, findet ein Wechsel vom Zustand A in den Zustand C statt. Im Zustand C werden Nachbildungen der Bedingungen c und d sowie der Zustände D und E in die Hardwarenachbildung geladen. Sofern der Speicherbereich nicht ausreicht, werden die Nachbildungen der Bedingungen a und b sowie der Zustände A und B überschrieben. Für den Fall, daß zum Zeitpunkt t4 die Bedingung d eintritt, findet ein Wechsel vom Zustand C in den Zustand D statt. Dies hat zur Folge, daß Nachbildungen der Bedingungen e und f sowie der Zustände F und H in die Nachbildungsschaltung geladen werden. Sofern der Speicherbereich nicht ausreicht, werden im Hinblick auf den aktuellen Zustand zunächst nicht benötigte Bedingungen und Zustände überschrieben.

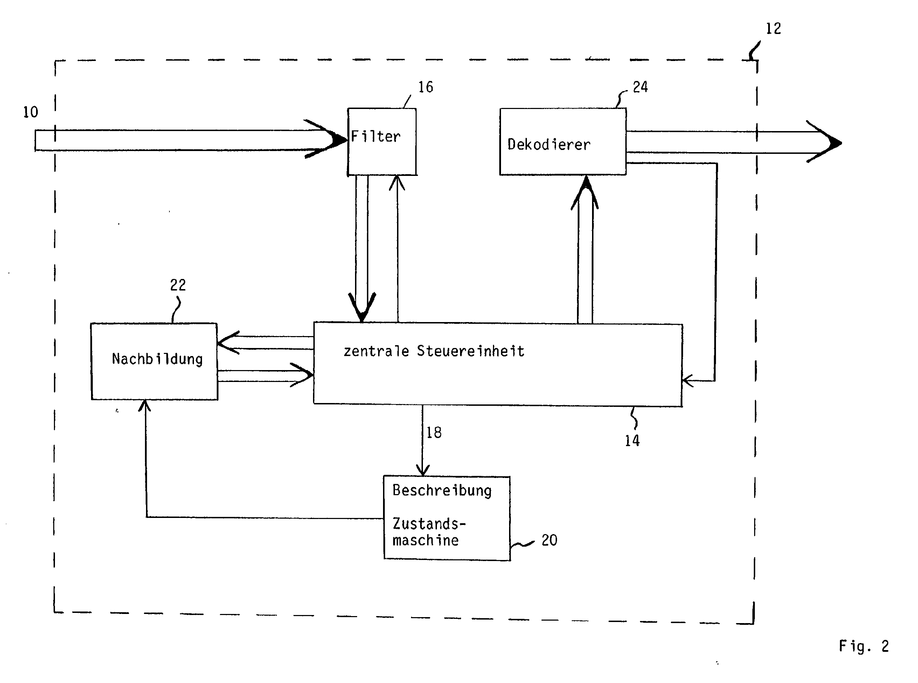

Fig. 2 zeigt in schematischer Darstellung den Aufbau einer erfindungsgemäßen Analysevorrichtung 12. Durch die Doppelpfeile wird der Fluß von Daten gekennzeichnet, während Einfachpfeile Information kennzeichnen, die aus den Daten ermittelt wurde. Nicht dargestellt ist eine Vorrichtung zum Herstellen einer Synchronisation zwischen den eingehenden Daten 10 der Analysevorrichtung 12 und eine Vorrichtung zum Ermitteln des aktuellen Zustands der Zustandsmaschine. Die Realisierungsmöglichkeiten für derartige Vorrichtungen sind dem Fachmann hinlänglich bekannt und werden deshalb hier nicht weiter beschrieben. Der ermittelte aktuelle Zustand wird einer zentralen Steuereinheit 14 der Analysevorrichtung 12 mitgeteilt. Im Hinblick auf diesen aktuellen Zustand konfiguriert die zentrale Steuereinheit 14 ein Filter 16. Insbesondere wird das Filter 16 im Hinblick auf die Suche nach Daten konfiguriert, die den Bedingungen entsprechen, die ausgehend vom ermittelten aktuellen Zustand möglich sind. Weiterhin legt die zentrale Steuereinheit 14 ein Signal 18 an einen Baustein 20, in dem eine softwaremäßige Beschreibung der verwendeten Zustandsmaschine abgelegt ist. Das Signal 18 korrespondiert mit dem aktuellen Zustand der Zustandsmaschine und veranlaßt eine Aktualisierung einer ladbaren Hardwareschaltung 22 wie bereits im Zusammenhang mit Fig. 1 erwähnt. Die Nachbildung 22 umfaßt nur einen im Hinblick auf den aktuellen Zustand der Zustandsmaschine relevanten Teil der Zustandsmaschine, d.h. insbesondere die ausgehend vom aktuellen Zustand möglichen Folgebedingungen und Folgezustände.

Nach dieser Initialisierung arbeitet die Analysevorrichtung 12 wie folgt. Entsprechend der Konfiguration des Filters 16 werden aus den eingehenden Daten 10 Daten ausgefiltert und an die zentrale Steuereinheit 14 geleitet. Diese leitet die Daten an die Nachbildung 22 des relevanten Teils der Zustandsmaschine, von wo aus die durch die Nachbildung 22 modifizierten Daten wieder an die zentrale Steuereinheit 14 zurückgeleitet werden. Diese Daten werden einem Dekodierer 24 zugeleitet, der die dekodierten Daten 26 am Ausgang der Analysevorrichtung 12 bereitstellt. Die dekodierten Daten werden vom Dekodierer 24 zusätzlich der zentralen Steuereinheit 14 zugeführt, welche daraus den neuen aktuellen Zustand der Zustandsmaschine ermittelt. In Abhängigkeit von diesem neuen aktuellen Zustand wird zum einen das Filter 16 neu konfiguriert, zum anderen die Nachbildung 22 über den Baustein 20 aktualisiert.

Die Komponenten der Analysevorrichtung 12 sind derart gewählt, daß die Analyse, d.h. die Bereitstellung der Ergebnisdaten 26 in Echtzeit erfolgen kann.

Für den Fall, daß das Protokoll gemäß dem OSI-Referenzmodell aufgebaut ist, ist die Analysevorrichtung insbesondere auf die Analyse der Protokollschicht ausgelegt, die zwischen der Datenverbindungsschicht und der Präsentationsschicht liegt. Die gesamte Analysevorrichtung 12 ist auf einem Chip implementiert und ein Protokolltester, der eine Analysevorrichtung 12 enthält, ist als ein in der Hand haltbares Gerät realisiert.

## Patentansprüche

1. Verfahren zur Analyse von Daten, deren Abfolge durch eine Zustandsmaschine beschreibbar ist, mittels einer Analysevorrichtung folgende Schritte umfassend:
a) Herstellen einer Synchronisation zwischen eingehenden Daten und Analysevorrichtung (12);
b) Ermitteln des aktuellen Zustands der Zustandsmaschine;
c) Konfigurieren eines Filters (16) der Analysevorrichtung (12) für die eingehenden Daten in Abhängigkeit des aktuellen Zustands;
d) Zuführen der gefilterten Daten an eine Nachbildung (22) eines im Hinblick auf den aktuellen Zustand relevanten Teils der Zustandsmaschine, wobei die Nachbildung in der Analysevorrichtung dadurch realisiert ist, daß die Zustände und Bedingungen dieses Teils der Zustandsmaschine durch eine ladbare Hardwareschaltung repräsentiert werden;
e) Ermitteln des neuen aktuellen Zustands der Zustandsmaschine durch Auswerten des Ergebnisses der Nachbildung (22);
f) Aktualisieren der Nachbildung (22) durch Laden mindestens eines weiteren Zustands und/oder einer weiteren Bedingung in die ladbare Hardwareschaltung in Abhängigkeit des ermittelten neuen aktuellen Zustands.

2. Verfahren nach Anspruch 1,
**dadurch gekennzeichnet,**
**daß** in Schritt b) das Filter (16) im Hinblick auf die Suche nach Daten konfiguriert wird, die den Bedingungen entsprechen, die ausgehend vom aktuellen Zustand möglich sind.

3. Verfahren nach einem der Ansprüche 1 oder 2,
**dadurch gekennzeichnet,**
**daß** die Zustandsmaschine einem Datenübertragungs-Protokoll entspricht.

4. Verfahren nach Anspruch 3,
**dadurch gekennzeichnet,**
**daß** das Protokoll gemäß dem OSI-Referenzmodell aufgebaut ist und mit der Analysevorrichtung die zwischen der Datenverbindungsschicht und der Präsentationsschicht liegende Protokollschicht analysiert wird.

5. Verfahren nach einem der vorhergehenden Ansprüche,
**dadurch gekennzeichnet,**
**daß** das Filter (16) eine ladbare Hardwareschaltung umfaßt, wobei Schritt f) weiterhin umfaßt:
Aktualisieren der Einstellung des Filters (16) durch Laden weiterer oder geänderter Filterparameter in Abhängigkeit des ermittelten neuen aktuellen Zustands.

6. Verfahren nach einem der vorhergehenden Ansprüche,
**dadurch gekennzeichnet,**
**daß** die Analyse in Echtzeit durchgeführt wird.

7. Vorrichtung zur Analyse von Daten, deren Abfolge durch eine Zustandsmaschine beschreibbar ist, umfassend:
- eine Synchronisiervorrichtung zum Herstellen einer Synchronisation zwischen eingehenden Daten und der Analysevorrichtung;
- einer Vorrichtung zum Ermitteln des aktuellen Zustands der Zustandsmaschine;
wobei die Vorrichtung **dadurch gekennzeichnet ist, daß** sie auch die folgenden Komponenten enthält;
- einen Filter (16), das im Hinblick auf den aktuellen Zustand der Zustandsmaschine konfigurierbar ist;
- eine ladbare Hardwareschaltung (22), mit der im Hinblick auf einen aktuellen Zustand der Zustandsmaschine Zustände und Bedingungen eines relevanten Teils der Zustandsmaschine nachbildbar sind;
- eine Vorrichtung (14) zum Ermitteln eines neuen aktuellen Zustands der Zustandsmaschine unter Verwendung des Ergebnisses der ladbaren Hardwareschaltung (22);
- eine Vorrichtung (14, 20) zum Aktualisieren der ladbaren Hardwareschaltung (22) durch Laden mindestens eines weiteren Zustands und/oder einer weiteren Bedingung in die ladbare Hardwareschaltung (22) in Abhängigkeit des Ergebnisses der Ermittlungsvorrichtung (14, 24).

8. Vorrichtung nach Anspruch 7,
**dadurch gekennzeichnet,**
**daß** das Filter (16) im Hinblick auf die Suche nach Daten konfigurierbar ist, die den Bedingungen entsprechen, die ausgehend vom ermittelten aktuellen Zustand möglich sind.

9. Vorrichtung nach einem der Ansprüche 7 oder 8,
**dadurch gekennzeichnet,**
**daß** die Zustandsmaschine einem Datenübertragungs-Protokoll entspricht.

10. Vorrichtung nach Anspruch 9,
**dadurch gekennzeichnet,**
**daß** das Protokoll gemäß dem OSI-Referenzmodell aufgebaut ist und mit der Analysevorrichtung die zwischen der Datenverbindungsschicht und der Präsentationsschicht liegende Protokollschicht analysierbar ist.

11. Vorrichtung nach einem der Ansprüche 7 bis 10,
**dadurch gekennzeichnet,**
**daß** das Filter (16) eine ladbare Hardwareschaltung umfaßt, die mittels der Aktualisierungsvorrichtung (14, 20) durch Laden weiterer oder geänderter Filterparameter in Abhängigkeit des ermittelten neuen aktuellen Zustands änderbar ist.

12. Vorrichtung nach einem der Ansprüche 7 bis 11,
**dadurch gekennzeichnet,**
**daß** die die Bauteile der Analysevorrichtung (12) derart ausgelegt sind, daß die Analyse in Echtzeit durchführbar ist.

13. Protokolltester mit einer Vorrichtung nach einem der Ansprüche 7 bis 12.

## Claims

1. Method for analysing by way of an analysing device data, the sequence of which being describable by a state machine, the method comprising the following steps:
a) creating a synchronisation between incoming data and the analysing device (12);
b) determining the current state of the state machine;
c) configuring a filter (16) of the analysing device (12) for the incoming data as a function of the current state;
d) supplying the filtered data to an emulation (22) of a part of the state machine, which is relevant in respect of the current state, the emulation of the analysing device being realised through the fact that the states and conditions of this part of the state machine are represented by a loadable hardware circuit;
e) determining the new current state of the state machine by evaluating the result of the emulation (22);
f) updating the emulation (22) by loading at least one further state and/or one further condition into the loadable hardware circuit as a function of the new current state determined.

2. Method according to claim 1
**characterised in that**
in step b) the filter (16) is configured in respect of the search for data that correspond to the conditions that are possible on the basis of the current state.

3. Method according to one of claims 1 or 2,
**characterised in that**
the state machine corresponds to a data transfer protocol.

4. Method according to claim 3,
**characterised in that**
the protocol is configured in accordance with the OSI reference model and that the protocol layer located between the data link layer and the presentation layer is analysed with the analysing device.

5. Method according to any one of the above claims,
**characterised in that**
the filter (16) comprises a loadable hardware circuit, with step f) additionally comprising:
Updating and setting of the filter (16) by loading further or changed filter parameters as a function of the new current state determined.

6. Method according to any one of the above claims,
**characterised in that**
the analysis is carried out in real time.

7. Device for analysing data, the sequence of which can be described by a state machine, comprising:
- a synchronisation device for creating a synchronisation between incoming data and the analysing device (12);
- a device for determining the current state of the state machine, said device being **characterised in that** it comprises the following components:
- a filter (16) which can be configured in respect of the current state of the state machine;
- a loadable hardware circuit (22) which can be used to emulate states and conditions of a relevant part of the state machine in respect of a current state of the state machine;
- a device (14) for determining a new current state of the state machine using the result of the loadable hardware circuit (22);
- a device (14, 20) for updating the loadable hardware circuit (22) by loading at least one further state and/or one further condition into the loadable hardware circuit (22) as a function of the result of the determination device (14, 24).

8. Device according to claim 7,
**characterised in that**
the filter (16) can be configured in respect of the search for data that correspond to the conditions that are possible on the basis of the current state determined.

9. Device according to one of claims 7 or 8,
**characterised in that**
the state machine corresponds to a data transfer protocol.

10. Device according to claim 9,
**characterised in that**
the protocol is configured in accordance with the OSI reference model and that the protocol layer located between the data link layer and the presentation layer can be analysed using the analysing device.

11. Device according to one of claims 7 to 10,
**characterised in that**
the filter (16) comprises a loadable hardware circuit that can be changed by means of the updating device (14, 20) by loading further or changed filter parameters as a function of the new current state determined.

12. Device according to one of claims 7 to 11,
**characterised in that**
the components of the analysing device (12) are designed such that the analysis can be carried out in real time.

13. Protocol tester with a device according to one of claims 7 to 12.

## Revendications

1. Procédé d'analyse de données dont la succession peut être décrite par une machine d'état au moyen d'un dispositif d'analyse, qui comprend les étapes suivantes :
a) création d'une synchronisation entre les données entrantes et le dispositif d'analyse (12) ;
b) détermination de l'état actuel de la machine d'état;
c) configuration d'un filtre (16) du dispositif d'analyse (12) pour les données entrantes en fonction de l'état actuel;
d) acheminement des donnés filtrées vers une copie (22) d'une partie pertinente de la machine d'état sur le plan de l'état actuel, la copie dans le dispositif d'analyse étant réalisée en ce que les états et conditions de cette partie de la machine d'état sont représentés par un circuit matériel chargeable ;
e) détermination du nouvel état actuel de la machine d'état par exploitation du résultat de la copie (22) ;
f) actualisation de la copie (22) en chargeant au moins un autre état et/ou une autre condition dans le circuit matériel chargeable en fonction du nouvel état actuel déterminé.

2. Procédé selon la revendication 1,
**caractérisé en ce que**,
à l'étape b), le filtre (16) est configuré en considérant la recherche de données qui correspondent aux conditions possibles en considérant l'état actuel.

3. Procédé selon l'une quelconque des revendications 1 ou 2,
**caractérisé en ce que**
la machine d'état correspond à un protocole de transmission de données.

4. Procédé selon la revendication 3,
**caractérisé en ce que**
le protocole est élaboré selon le modèle de référence OSI et est analysé avec le dispositif d'analyse de la couche Session figurant entre la couche Transport et la couche Présentation.

5. Procédé selon l'une quelconque des revendications précédentes,
**caractérisé en ce que**
le filtre (16) comprend un circuit matériel, l'étape f) comprenant en outre: l'actualisation du réglage du filtre (16) en chargeant d'autres paramètres de filtre ou des paramètres modifiés en fonction du nouvel état actuel déterminé.

6. Procédé selon l'une quelconque des revendications précédentes,
**caractérisé en ce que**
l'analyse est réalisée en temps réel.

7. Dispositif d'analyse de données dont la succession peut être décrite par une machine d'état, qui comprend :
- un dispositif de synchronisation pour créer une synchronisation entre des données entrantes et le dispositif d'analyse ;
- un dispositif pour déterminer l'état actuel de la machine d'état ;
le dispositif étant **caractérisé en ce qu'**il contient également les composants suivants ;
- un filtre (16) configurable en considérant l'état actuel de la machine d'état ;
- un circuit matériel chargeable (22) par lequel, en considérant un état actuel de la machine d'état, des états et des conditions d'une partie pertinente de la machine d'état peuvent être copiés ;
- un circuit matériel chargeable (22) par lequel, en considérant un état actuel de la machine d'état, des états et des conditions d'une partie pertinente de la machine d'état peuvent être copiés;
- un dispositif (14) pour déterminer un nouvel état actuel de la machine d'état en utilisant le résultat du circuit matériel chargeable (22);
- un dispositif (14, 20) pour actualiser le circuit matériel chargeable (22) en chargeant au moins un autre état et/ou une autre condition dans le circuit matériel chargeable (22) en fonction du résultat du dispositif de détermination (14, 24).

8. Dispositif selon la revendication 7,
**caractérisé en ce que**
le filtre (16) est configurable en considérant la recherche de données qui correspondent aux conditions qui sont possibles en fonction de l'état déterminé actuel.

9. Dispositif selon l'une quelconque des revendications 7 ou 8,
**caractérisé en ce que**
la machine d'état correspond à un protocole de transmission de données.

10. Dispositif selon la revendication 9,
**caractérisé en ce que**
le protocole est élaboré selon le modèle de référence OSI et peut être analysé avec le dispositif d'analyse de la couche Session figurant entre la couche Transport et la couche Présentation.

11. Dispositif selon l'une quelconque des revendications 7 à 10,
**caractérisé en ce que**
le filtre (16) comprend un circuit matériel qui peut être modifié par le dispositif d'actualisation (14, 20) en chargeant d'autres paramètres de filtre ou des paramètres modifiés en fonction du nouvel état actuel déterminé.

12. Dispositif selon l'une quelconque des revendications 7 à 11,
**caractérisé en ce que**
les pièces du dispositif d'analyse (12) sont configurées de manière telle que l'analyse peut être réalisée en temps réel.

13. Testeur de protocole comportant un dispositif selon l'une quelconque des revendications 7 à 12.
